# EUROPEAN PATENT APPLICATION

(11) **EP 1 755 106 A1**
(43) Date of publication of application: **21.02.2007**
(21) Application number: 06119155.7
(22) Date of filing: 18.08.2006
(51) Int. Cl.: G09G 5/00, G06F 1/32

(54) **Display apparatus and control method thereof**

(30) Priority: 19.08.2005 KR 20050076431
(71) Applicant: Samsung Electronics Co., Ltd., Suwon-si, Gyeonggi-Do (KR)
(72) Inventor: Yang, Geun-sam, Yeongtong-gu Suwon-si Gyeonggi-do (KR); Hong, Yun-ju, Yeongtong-gu Suwon-si Gyeonggi-do (KR); Choi, Chang-ik Samsung Raemian Apt., Gyeonggi-do (KP)
(74) Representative: Read, Matthew Charles

(57) **Abstract**

A display apparatus comprises a first communication port (10) to receive a first video signal, a second communication port (20) to receive a second video signal, and a display unit (5). A first video signal processor (30) includes a first synchronous signal processor (31) to check whether a first synchronous video signal is inputted, and a second video signal processor (40) including a second synchronous signal processor (42) to check whether a second video signal is inputted. A controller alternately enables the first and second synchronous signal processors according to a predetermined check time to check whether the first or second synchronous signal is inputted, in a power saving mode. The present invention provides a display apparatus and a control method thereof, which can decrease power consumption in a power saving mode effectively.

## Description

The present invention relates to an apparatus for driving a display, and more particularly, to such apparatus and a method of controlling the apparatus, which can decrease power consumption in a power saving mode.

In general, a display apparatus receives and processes a video signal, thereby displaying an image based on the video signal. Such a display apparatus can include a digital visual interface (DVI) communication port to receive a digital video signal.

To enhance its utility, the display apparatusmay receive and process the video signal from various external signal sources such as a video tape recorder (VTR), a video camcorder, a set top box (STB) or the like. To display the image based on the video signal received from various external signal sources, the display apparatus needs one or more communication ports to receive various video signals from the various external signal sources, and one or more video processors to process the various video signals.

The operation of a conventional display apparatus that includes a plurality of DVI communication ports and a plurality of video processors to receive and process various video signals from various external signal sources, will now be described in relation to its power saving mode. The conventional display apparatus supports a priority function that gives priority to the received video signals. Therefore, such a conventional display apparatus processes a video signal having higher priority than other video signals, thereby displaying an image based on the video signal having the priority over the other video signals.The conventional display apparatus enters the power saving mode to minimize power consumption when a predetermined event triggering the power saving mode occurs.

When the conventional display apparatus receives a video signal in the power saving mode, it switches from the power saving mode to a normal mode for displaying the image based on the received video signal. Thus, the conventional display apparatus should continuously enable the plurality of video processors to check whether a synchronous signal of the video signal is inputted or not, in order to determine whether the video signal is inputted in the power saving mode or a video signal having priority is inputted.

Thus, the power consumption is not minimized effectively because the conventional display apparatus continuously enables the plurality of video processors to check the received video signal even though it is in the power saving mode.

Accordingly, it is an aspect of the present invention to provide a display apparatus and a control method thereof, which can decrease power consumption effectively in a power saving mode.

Additional aspects and advantages of the present invention will be set forth in part in the description which follows and, in part, will be obvious from the description, or may be learned by practice of the general inventive concept.

The foregoing and/or other aspects of the present invention may be achieved by providing a display apparatus comprising a first communication port to receive a first video signal, a second communication port to receive a second video signal, and a display unit, the display apparatus further comprising a first video signal processor including a first synchronous signal processor to check whether a first synchronous signal of the first video signal is inputted, a second video signal processor including a second synchronous signal processor to check whether a second synchronous signal of the second video signal is inputted, and a controller to alternately enable the first and second synchronous signal processors according to a predetermined check time to check whether the first or second synchronous signal is inputted in a power saving mode.

According to an embodiment of the present invention, the first video signal processor comprises a first scaler including a first scaling processor to process the first video signal to have a format adapted for the display unit, and the second video signal processor comprises a second scaler including a second scaling processor to process the second video signal to have a format adapted for the display unit.

According to an embodiment of the present invention, each of the first and second communication ports comprises a digital visual interface (DVI) communication port.

According to an embodiment of the present invention, the controller controls the first and second scalers to perform in the power saving mode to disable the first scaling processor of the first scaler and the second scaling processor of the second scaler, to enable one of the first and second synchronous signal processors, and to disable the enabled one and enabling the other one after the lapse of the check time, alternately.

According to an embodiment of the present invention, when a check signal indicating that the synchronous signal is outputted from one of the first and second synchronous signal processors while controlling the first and second scalers to alternately enable the first and second synchronous signal processors, the controller controls one of the first and second scalers to enable the scaling processor of the corresponding scaler comprising the synchronous signal processor outputting the check signal and to display the video signal processed by the corresponding scaler.

According to an embodiment of the present invention, when a check signal indicating that the synchronous signal is outputted from one of the first and second synchronous signal processors while controlling the first and second scalers to alternately enable the first and second synchronous signal processors, the controller controls one of the first and second scalers to continuously enable the other synchronous signal processor that does not output the check signal.

The foregoing and/or other aspects of the present invention may be achieved by providing a method of controlling a display apparatus comprising a first communication port to receive a first video signal, a second communication port to receive a second video signal, a first video signal processor including a first synchronous signal processor to check whether a first synchronous signal of the first video signal is inputted, a second video signal processor including a second synchronous signal processor to check whether a second synchronous signal of the second video signal is inputted, and a display unit, the method comprising disabling the first and second video signal processors in a power saving mode, and alternately enabling the first and second synchronous signal processors according to a predetermined check time to check whether the first or second synchronous signal is inputted.

According to an embodiment of the present invention, the first video signal processor comprises a first scaler including a first scaling processor to process the first video signal to have a format adapted for the display unit, and the second video signal processor comprises a second scaler including a second scaling processor to process the second video signal to have a format adapted for the display unit.

According to an embodiment of the present invention, each of the first and second communication ports comprises a digital visual interface (DVI) communication port.

According to an embodiment of the present invention, the disabling of the first and second video signal processors in the power saving mode comprises disabling the first scaling processor of the first scaler and the second scaling processor of the second scaler.

According to an embodiment of the present invention, the enabling of the first and second synchronous signal processors alternately comprises enabling one of the first and second synchronous signal processors, determining whether the check time is elapsed, disabling the enabled one and enabling the other synchronous signal processor after the lapse of the check time, and returning to the determining whether the check time is elapsed.

According to an embodiment of the present invention, the method further comprises determining whether the enabled one of the first and second synchronous signal processors outputs a check signal, informing that the synchronous signal is output from one of the synchronous signal processors, enabling the corresponding scaler by enabling the scaling processor of the corresponding scaler comprising the synchronous signal processor outputting the check signal when it is determined that the check signal is inputted, and displaying an image based on the video signal processed by the corresponding scaler on the display unit.

According to an embodiment of the present invention, the method further comprises continuously enabling the other synchronous signal processor that does not output the check signal when it is determined that the check signal is inputted.

According to an embodiment of the present invention, the method further comprises periodically enabling the other synchronous signal processor that does not output the check signal when it is determined that the check signal is inputted.

The foregoing and/or other aspects of the present invention may be achieved by providing a computer readable recording medium containing computer readable codes to perform a method, the method comprising disabling first and second video signal processors in a power saving mode, and alternatively enabling the first and second synchronous signal processor according to a predetermined check time to check whether the first or second synchronous signal is input.

The foregoing and/or other aspects of the present invention may be achieved by providing a display apparatus comprising a plurality of scalers having a plurality of synchronous signal processors and a plurality of scaling processors, and a controller to selectively enable the plurality of synchronous signal processors in a power saving mode to check whether a video signal is input through the selectively enabled plurality of synchronous signal processors to be processed in at least one of the scaling processors.

According to an embodiment of the present invention, the plurality of synchronous signal processors comprise first and second synchronous signal processors to receive first and second video signals having first and second video formats, respectively, and the controller selectively enable the first and second synchronous signal processors.

According to an embodiment of the present invention, the controller enables the first synchronous signal processor a predetermined period of time after disabling the second synchronous signal processor.

According to an embodiment of the present invention, the controller enables the first synchronous signal processor for a first predetermined period of time and enables the second synchronous signal processor for a second predetermined period of time, and the first and second periods of time do not overlap.

According to an embodiment of the present invention, the first and second periods of time overlap by a third period of time shorter than the first and second periods of time.

According to an embodiment of the present invention, when first and second video signals are simultaneously received through the first and second synchronous signal processors, the controller enables a corresponding one of the scaling processors to process one of the first and second video signals according to a priority of the first and second signals and/or the first and second synchronous signal processors.

According to an embodiment of the present invention, the controller determines that the video signal and a second video signal are respectively received from at least two of the plurality of synchronous signal processors, and enables a corresponding one of the plurality of scaling processors according to a priority of the first and second video signals.

According to an embodiment of the present invention, enabling periods of the plurality of synchronous signal processors do not overlap.

According to an embodiment of the present invention, enabling periods of the plurality of synchronous signal processors overlap by a predetermined period of time shorter than at least one of the enabling periods.

These and/or other aspects and advantages of the present invention will become apparent and more readily appreciated from the following description, taken in conjunction with the accompanying drawings of which:
Figure 1 is a control block diagram illustrating a display apparatus according to an embodiment of the invention;
Figure 2 is a control flowchart illustrating a method of a display apparatus according to an embodiment of the invention; and
Figures 3A and 3B are control flowcharts illustrating a priority function of the display apparatus in Figure 2.

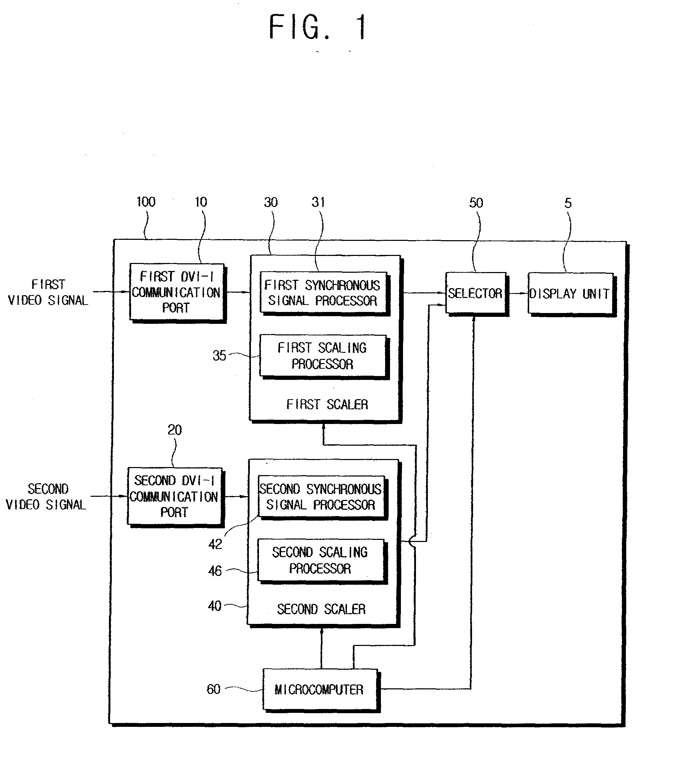

Figure 1 is a control block diagram illustrating a display apparatus 100. As shown therein, the display apparatus 100 includes a display unit 5, a first DVI-I communication port 10, a second DVI-I communication port 20, a first scaler 30, a second scaler 40, a selector 50, and a microcomputer 60 as a control unit.

The display unit 5 receives a video signal from either of the first scaler 30 or the second scaler 40, and displays an image based on the received video signal. The display unit 5 includes a display panel (not shown) on which an image is displayed, and a panel driver (not shown) to process the video signal received from either of the first scaler 30 or the second scaler 40 and to drive the display panel to display the image.

The first DVI-I communication port 10 is used to receive a first video signal from various external signal sources (not shown) such as a computer, a video tape recorder (VTR), a video camcorder, a set top box (STB) or the like. The first video signal received through the first DVI-I communication port 10 is an analog video signal or a digital video signal.

The second DVI-I communication port 20 is used to receive a second video signal from second various external signal sources (not shown) such as a computer, a VTR, a video camcorder, an STB or the like. The second video signal received through the second DVI-I communication port 20 is either of an analog video signal or a digital video signal.

In Figure 1, the display apparatus 100 employs the first and second DVI-I communication ports 10 and 20 as exemplary communication ports to receive the video signal from the external signal source (not shown), but is not limited thereto. Alternatively, the display apparatus may employ a DVI-D communication port and a D-SUB communication port (not shown).

Further, the first and second video signals are one of the analog and digital video signals such as a broadcasting signal received through an antenna (not shown), a video signal outputted from a VTR or a digital versatile disc (DVD) player, a composite video baseband signal (CVBS), an S-video signal, a standard definition (SD) video signal, a high definition (HD) video signal, an RGB video signal, a personal computer (PC) video signal, and so on.

The first scaler 30 is used as a video signal processor to process the first video signal received through the first DVI-I communication port 10 to have a first format adapted for the display unit 5. Here, the first scaler 30 includes a first synchronous signal processor 31 and a first scaling processor 35.

The first synchronous signal processor 31 checks whether a first synchronous signal is inputted through the first DVI-I communication port 10. When the first synchronous signal is inputted through the first DVI-I communication port 10, the first synchronous signal processor 31 outputs a check signal to indicate an input of the first synchronous signal. Thus, it is determined that the first video signal is inputted through the first DVI-I communication port 10 according to the determination of whether the first synchronous signal processor 31 outputs the check signal.

The first scaling processor 35 processes the first video signal received through the first DVI-I communication port 10 to have the first format adapted for the display unit 5. In a case where the first scaler 30 is formed as a single chip having all video processors, for example, a video processing system, the first scaling processor 35 can include a video processor (not shown) to analog-to-digital (A/D) convert or decode the first video signal, an on screen display (OSD) generator (not shown) to generate an OSD menu signal, and a mixer (not shown) to mix the first video signal outputted from the video processor (not shown) with the OSD menu signal outputted from the OSD generator.

The second scaler 40 is used as a video signal processor to process the second video signal received through the second DVI-I communication port 20 to have a second format adapted for the display unit 5. Here, the second scaler 40 includes a second synchronous signal processor 42 and a second scaling processor 46.

The second synchronous signal processor 42 checks whether a second synchronous signal is inputted through the second DVI-I communication port 20. When the second synchronous signal is inputted through the second DVI-I communication port 20, the second synchronous signal processor 42 outputs a check signal to indicate an input of the second synchronous signal. Thus, it is determined that the second video signal is inputted through the second DVI-I communication port 20 according to whether the second synchronous signal processor 42 outputs the check signal.

The second scaling processor 46 processes the second video signal received through the second DVI-I communication port 20 to have the second format adapted for the display unit 5. In a case where the second scaler 40 is formed as a single chip having all video processors, for example, the video processing system, the second scaling processor 46 can include a video processor (not shown) to analog-to-digital (A/D) convert or decode the second video signal, an on screen display (OSD) generator (not shown) to generate an OSD menu signal, and a mixer (not shown) to mix the second video signal outputted from the video processor (not shown) with the OSD menu signal outputted from the OSD generator.

The selector 50 performs a switching function to selectively provide the display unit 5 with the video signal from the first and second scalers 30 and 40. It is possible that the switching function is controlled by the microcomputer 60.

The microcomputer 60 controls a power supplying unit (not shown) and internal circuits to enter a power saving mode in a case where a predetermined event to enter the power saving mode is inputted, e.g., when the display apparatus receives no signal for a predetermined period of time, when a predetermined key for the power saving mode is inputted, etc.

Meanwhile, the microcomputer 60 gives priority to the input video signal, and supports a priority function that processes a video signal having priority higher than other video signals. Here, a user can previously set the priority of the video signal. Even though the microcomputer 60 of the display apparatus 100 according to the present embodiment does not support the priority function, the function and the effect of the present invention do not change.

Thus, the microcomputer 60 disables the first scaling processor 35 of the first scaler 30 and the second scaling processor 46 of the second scaler 40 when the event to enter the power saving mode is inputted. In the power saving mode, the microcomputer 60 idles internal circuits of the display apparatus 100 and at the same time disables the first scaler 30 and the second scaler 40 from their scaling operations, thereby reducing a power consumed by the first and second scaling processors 35 and 46.

At this time, the microcomputer 60 alternately enables the first and second synchronous signal processors 31 and 42 according to predetermined check time in order to check whether the first or second synchronous signal is inputted, thereby checking whether the first or second video signal is inputted to the display apparatus 100. Here, the check time is long enough to allow each of the synchronous signal processors 31 and 42 to check whether the synchronous signal is input or not. It is possible that the check time is less than 30ms.

In more detail, while entering the power saving mode by the corresponding event input, the microcomputer 60 disables the first scaling processor 35, the second scaling processor 46, and the second synchronous signal processor 42, and enables the first synchronous signal processor 31. Then, the first synchronous signal processor 31 checks whether the first synchronous signal is inputted or not, thereby determining whether the first video signal is inputted. The microcomputer 60 determines whether the check time elapses after enabling the first synchronous signal processor 31. After the lapse of the check time, the microcomputer 60 disables the first synchronous signal processor 31 and enables the second synchronous signal processor 42. Then, the second synchronous signal processor 42 checks whether the second synchronous signal is input or not, thereby determining whether the second video signal is input. The microcomputer 60 determines whether the check time elapses after enabling the second synchronous signal processor 42. After the lapse of the check time, the microcomputer 60 disables the second synchronous signal processor 42 and enables the first synchronous signal processor 31. Thus, the micom 60 enables one of the first and second synchronous signal processors 31 and 42 and then disables the enabled one and at the same time enables the other one after the lapse of the check time, and this operation of the microcomputer 60 may be repeated.

That is, in the power saving mode, the microcomputer 60 repeats the operation of alternately enabling the first synchronous signal processor 31 and the second synchronous signal processor 42 according to a check time, thereby alternately checking whether the first or second synchronous signal is inputted according to a the check time.

Thus, in the power saving mode, the display apparatus 100 according to the present embodiment does not enable both the first and second scalers 30 and 40 at once but alternately enables the first and second synchronous signal processors 31 and 42 in order to check whether the first or second video signal is inputted, thereby reducing the power consumption in the power saving mode.

Meanwhile, the microcomputer 60 activates the first scaler 30 by enabling the first scaling processor 35 while continuously enables the second scaling processor 42 when the check signal indicating the output of the first synchronous signal from the first synchronous signal processor 31 is outputted before the check time elapses in a state that the first scaling processor 35, the second scaling processor 46, and the second synchronous signal processor 42 are disabled and the first synchronous signal processor 31 is enabled. Therefore, the first video signal scaling-processed by the first scaler 30 is displayed as an image on the display unit 5.

At this time, the microcomputer 60 compares the priorities of the first and second video signals on the basis of priorities previously set according to the video signals when the check signal indicating the output of the second synchronous signal from the enabled second synchronous signal processor 42 is outputted while displaying an image based on the first video signal. In a case where the first video signal has the priority higher than that of the second video signal, the microcomputer 60 controls the selector 50 and the first scaler 30 to maintain displaying an image based on the first video signal and controls the second scaler 40 to disable the second scaling processor 46 while continuously enabling the second synchronous signal processor 42. On the other hand, in a case where the second video signal has the priority higher than that of the first video signal, the microcomputer 60 activates the second scaler 40 by enabling the second scaling processor 46 and controls the selector 50 to make the second video signal scaling-processed by the second scaler 40 be outputted to the display unit 5. Thus, the second video signal scaling-processed by the second scaler 40 is displayed as an image on the display unit 5. At this time, it is possible that the microcomputer 60 disables the first scaling processor 35 of the first scaler 30 for processing the first video signal (to be not displayed), but enables only the first synchronous signal processor 31.

Further, the microcomputer 60 activates the second scaler 40 by enabling the second scaling processor 46 while continuously enables the first scaling processor 31 when the check signal indicating the output of the second synchronous signal from the second synchronous signal processor 42 is outputted before the check time elapses in a state that the first scaling processor 35, the second scaling processor 46, and the first synchronous signal processor 31 are disabled and the second synchronous signal processor 42 is enabled. Therefore, the second video signal scaling-processed by the second scaler 40 is displayed as an image on the display unit 5.

At this time, the microcomputer 60 compares the priorities of the first and second video signals on the basis of the priorities previously set according to the video signals when the check signal indicating the output of the first synchronous signal from the enabled first synchronous signal processor 31 is outputted while displaying an image based on the second video signal. In a case where the second video signal has the priority higher than that of the first video signal, the microcomputer 60 controls the selector 50 and the second scaler 40 to maintain displaying an image based on the second video signal, and controls the second scaler 40 to disable the first scaling processor 35 while continuously enabling the first synchronous signal processor 31. On the other hand, in a case where the first video signal has the priority higher than that of the second video signal, the microcomputer 60 activates the first scaler 30 by enabling the first scaling processor 35, and controls the selector 50 to make the first video signal scaling- processed by the first scaler 30 be outputted to the display unit 5. Thus, the first video signal scaling-processed by the first scaler 30 is displayed as an image on the display unit 5. At this time, it is possible that the microcomputer 60 disables the second scaling processor 46 of the second scaler 40 for processing the second video signal (to be not displayed), but enables only the second synchronous signal processor 42.

As described above, the display apparatus 100 according to an embodiment of the present embodiment solves conventional problems that activate both the first and second scalers to check whether the first or second video signal is inputted in the power saving mode. That is, the display apparatus 100 according to an embodiment of the present invention alternately enables the first synchronous signal processor 31 and the second synchronous signal processor 42, and thus alternately checks whether the first or second video signal is inputted, thereby minimizing the power consumption in the power saving mode.

In the present embodiment, the display apparatus 100 includes two communication ports 10 and 20 to receive the first and second video signals, and two scalers 30 and 40 to process the first and second video signals. However, the present invention is not limited thereto.

Alternatively, the display apparatus 10 may include two or more communication ports to receive two or more video signals, and two or more scalers to process the video signals received through the communication ports. For example, in a case where the display apparatus 100 includes four scalers, four synchronous signal processors each provided in four scalers are alternately enabled according to a predetermined check time in the power saving mode, so that it is possible to determine whether first, second, third or fourth video signals are inputted.

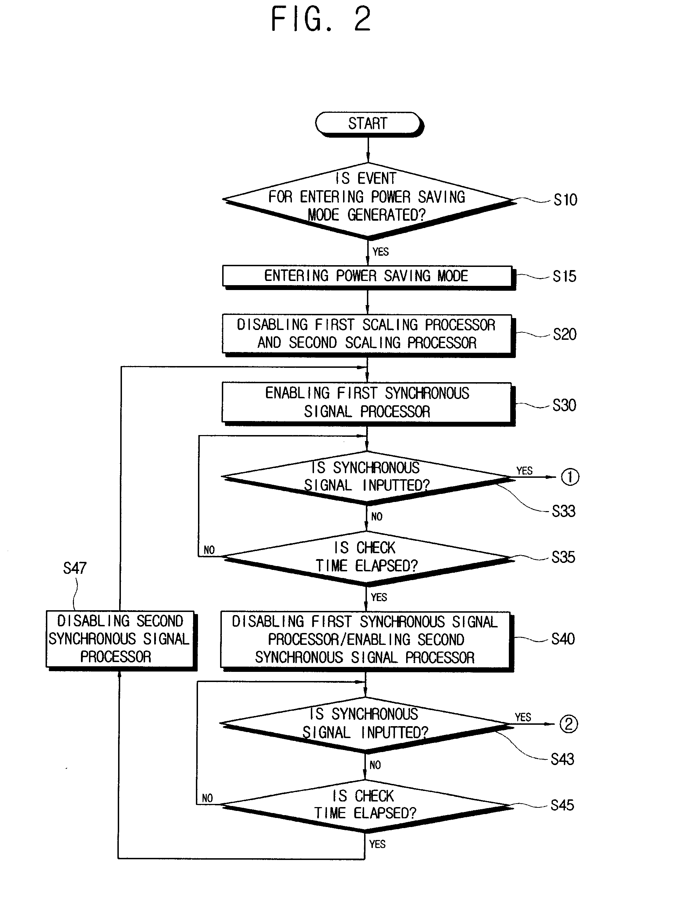

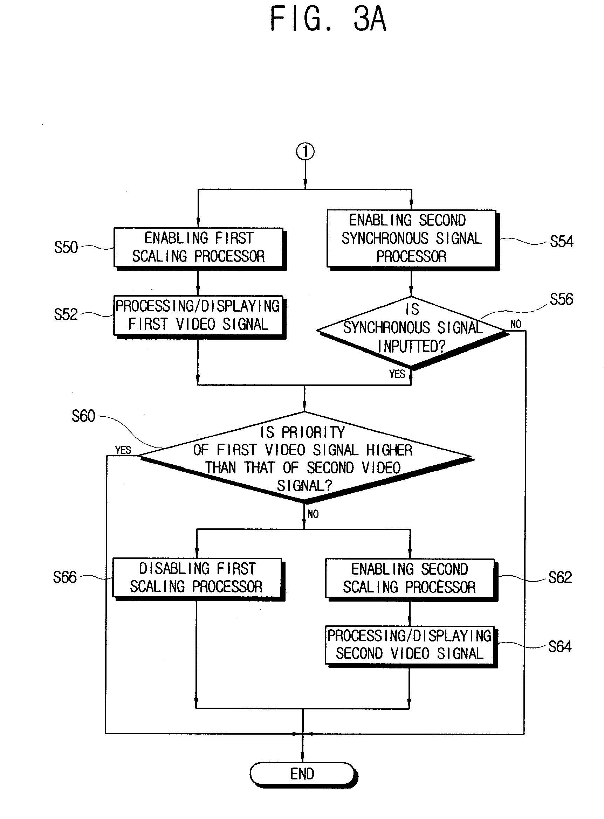

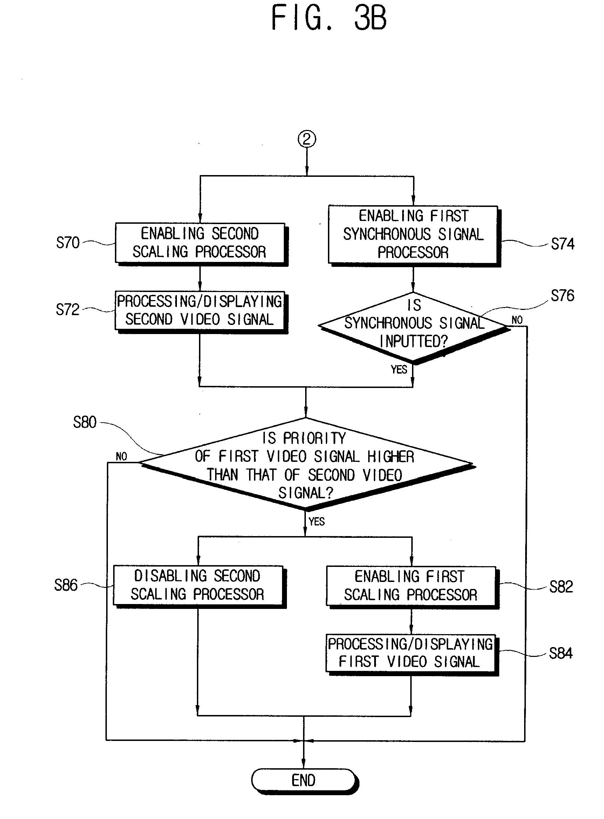

Here, a control method of the foregoing display apparatus 100 will be described below with reference to Figures 2, 3A and 3B.

At operation S10, the microcomputer 60 determines whether a predetermined event to enter the power saving mode is generated, e.g., when the display apparatus 100 receives no signal for a predetermined period of time, when a predetermined key corresponding to the power saving mode is inputted, etc. When the event to enter the power saving mode is generated, at operation S15 the microcomputer 60 controls the power supplying unit (not shown) and the respective internal circuits to enter the power saving mode.

While entering the power saving mode, at operation S20 the microcomputer 60 disables the first scaling processor 35 of the first scaler 30 and the second scaling processor 46 of the second scaler 40. That is, in the power saving mode, the microcomputer 60 idles the internal circuits (not shown) of the display apparatus 100 and at the same time disables the first scaler 30 and the second scaler 40 from their scaling operations, thereby reducing the power consumed by the first and second scaling processors 35 and 46.

At this time, at operation S30 the micom 60 disables the second synchronous signal processor 42 but enables the first synchronous signal processor 31. Then, the first synchronous signal processor 31 is activated to check whether the first synchronous signal is inputted or not at operation S33. While the first synchronous signal processor 31 is enabled and checks the input of the first synchronous signal, at operation S35 the microcomputer 60 determines whether a predetermined check time is elapsed or not. When the first synchronous signal processor 31 checks no first synchronous signal during the elapse of the check time, at operation S40 the micom 60 disables the first synchronous signal processor 31 but enables the second synchronous signal processor 42. Therefore, the second synchronous signal processor 42 is activated to check whether the second synchronous signal is inputted or not at operation S43. Further, while the second synchronous signal processor 42 is enabled and checks the input of the second synchronous signal, at operation S45 the micom 60 determines whether a predetermined check time is elapsed or not. When the second synchronous signal processor 42 checks no second synchronous signal during the elapse of the check time, at operation S47 the micom 60 disables the second synchronous signal processor 42. Then, the microcomputer 60 performs the operation S30 to enable the first synchronous signal processor 31 again. That is, the microcomputer 60 alternatively enables the first and second synchronous signal processors 31 and 42 per check time, thereby repeating the operations S30 through S47.

Thus, in the control method of the display apparatus according to the present embodiment, to check whether the first or second video signal is inputted or not in the power saving mode, all of the first and second scalers 30 and 40 may not be activated, but only the first and second synchronous signal processors 31 and 42 are alternately enabled, thereby reducing the power consumption in the power saving mode. It is possible that the first synchronous signal processor 31 may be enabled a predetermined pause period of time after the second synchronous signal processor 42 has been disabled. It is also possible that an overlap period exists between enabling periods of the first and second synchronous signal processors 31 and 42.

Referring to Figure 2, while entering the power saving mode, an operating order is as follows: the first synchronous signal processor 31 is first enabled, and then the first synchronous signal processor 31 is disabled but the second synchronous signal processor 42 is enabled after the check time is elapsed. However, the operating order is not limited thereto. Alternatively, while entering the power saving mode, the second synchronous signal processor 42 is first enabled to check whether the second synchronous signal is inputted or not, and then the second synchronous signal processor 42 is disabled but the first synchronous signal processor 31 is enabled after the check time is elapsed, thereby checking whether the first synchronous signal is inputted or not.

Meanwhile, the microcomputer (micom) 60 checks the priority assigned to the input video signals, and processes a video signal having priority higher than other video signals according to a priority function. Here, a user can previously set the priority of the video signal.

In the control flowchart of the display apparatus in Figure 2, control flowcharts of when the priority function is supported and the activated synchronous signal processor senses the input of the synchronous signal will be described with reference to Figures 3A and 3B.

Referring to Figure 3A, it will be described in more detail when the first synchronous signal is inputted while micom 60 alternately enables the first and second synchronous signal processors 31 and 42 according to a predetermined check time.

At the operation S30, the first scaling processor 35, the second scaling processor 46, and the second synchronous signal processor 42 are disabled and the first synchronous signal processor 31 is enabled. At step S33the first synchronous signal processor 31 checks that the first synchronous signal is inputted at. In this situation, the first synchronous signal processor 31 outputs a check signal indicating the input of the first synchronous signal, to the micom 60 (entering a path (1)). In the path (1), when the micom 60 receives the check signal from the first synchronous signal processor 31 before the check time has elapsed, the micom 60 at operation S50 enables the first scaling processor 35 and so fully activates the first scaler 30. Then, at operation S52, the micom 60 controls the first scaler 30 and the selector 50 to scaling-process the first video signal, and display an image based on the processed first video signal on the display unit 5.

At this time, while performing the operation S50, the micom 60 controls the second scaler 40 to enable the second synchronous signal processor 42 at operation S54. At operation S56, the second synchronous signal processor 42, which is continuously or periodically activated, is checked continually to determine whether the second synchronous signal is inputted.

At step S56, the second synchronous signal processor 42 outputs a check signal indicating the input of the second synchronous signal to the microcomputer 60, and this is checked in the operation S56.

When the microcomputer 60 receives the check signal indicating the input of the second synchronous signal from the enabled second synchronous signal processor 42 while displaying an image based on the first video signal, the microcomputer 60 compares the priorities of the first and second video signals on the basis of the priorities previously set according to the video signals, at operation S60. When the priority of the first video signal is higher than that of the second video signal, the microcomputer 60 controls the selector 50 and the first scaler 30 to maintain displaying an image based on the first video signal. That is, the micom 60 activates the first scaler 30, and controls the second scaler 40 to disable the second scaling processor 46 and to continuously or periodically enable the second synchronous signal processor 42 until the second synchronous signal is detected.

On the other hand, when the priority of the second video signal is higher than that of the first video signal, at operation S62 the microcomputer 60 enables the second scaling processor 46 and fully activates the second scaler 40. Thus, the micom 60 controls the second scaler 40 and the selector 50 to scaling-process the second video signal, thereby displaying an image based on the second video signal on the display unit 5 at operation S64. While performing the operation S62, the micom 60 controls the first scaler 30 to disable the first scaling processor 35 of the first scaler 30 and continuously or periodically enables only the first synchronous signal processor 31 at operation S66. Thus, the first synchronous signal processor 31 is continuously or periodically activated to thereby continuously or periodically check whether the first synchronous signal is inputted or not.

Referring to Figure 3B, it will be described in more detail when the second synchronous signal is inputted while alternately enabling the first and second synchronous signal processors 31 and 42 according to a predetermined check time.

When, at step S40 the first scaling processor 35, the second scaling processor 46, and the first synchronous signal processor 31 are disabled and the second synchronous signal processor 42 is enabled, and when the second synchronous signal processor 42 checks that the second synchronous signal is inputted at operation S43, if the second synchronous signal processor 42 outputs the check signal indicating the input of the second synchronous signal to the microcomputer 60 the process enters path (2)). In the path(2), when the microcomputer 60 receives the check signal from the second synchronous signal processor 42 before the check time has elapsed, at operation S70, the micom 60 enables the second scaling processor 46 and fully activates the second scaler 40. Then, at operation S72, the micom 60 controls the second scaler 40 and the selector 50 to scaling-process the second video signal, thereby displaying an image based on the processed second video signal on the display unit 5. At this time, while performing the operation S70, the micom 60 controls the first scaler 30 to continuously or periodically enable the first synchronous signal processor 31, at operation S74. Therefore, at operation S76 the first synchronous signal processor 31 is continuously or periodically activated to continuously or periodically check whether the first synchronous signal is inputted.

Here, the first synchronous signal processor 31 outputs the check signal indicating the input of the first synchronous signal to the microcomputer 60 when checks the input of the first synchronous signal in the operation S76. When the micom 60 receives the check signal indicating the input of the first synchronous signal from the enabled first synchronous signal processor 31 while displaying an image based on the second video signal, the micom 60 compares the priorities of the first and second video signals on the basis of the priorities previously set according to the video signals at operation S80. When the priority of the second video signal is higher than that of the first video signal, the microcomputer 60 controls the selector 50 and the second scaler 40 to maintain displaying an image based on the second video signal. That is, the microcomputer 60 activates the second scaler 40, and controls the first scaler 30 to disable the first scaling processor 35 and continuously or periodically enable the first synchronous signal processor 31.

On the other hand, when the priority of the first video signal is higher than that of the second video signal, at operation S82 the microcomputer 60 enables the first scaling processor 35 and fully activates the first scaler 30. Thus, the microcomputer 60 controls the first scaler 30 and the selector 50 to scaling-process the first video signal, thereby displaying an image based on the first video signal on the display unit 5 at operation S84. While performing the operation S82, the microcomputer 60 controls the second scaler 40 to disable the second scaling processor 46 of the second scaler 40 and continuously or periodically enable only the second synchronous signal processor 42 at operation S86. Thus, the second synchronous signal processor 42 is continuously or periodically activated to thereby continuously or periodically check whether the second synchronous signal is inputted or not.

As described above, the method of controlling the display apparatus 100 according to an embodiment of the present invention solves the problems associated with conventional devices that activate both the first and second scalers to check whether the first or second video signal is inputted in the power saving mode. That is, the method of controlling the display apparatus 100 according to an embodiment of the present invention alternately enables only the first synchronous signal processor 31 and the second synchronous signal processor 42, and thus alternately checks whether the first or second video signal is inputted, thereby minimizing the power consumption in the power saving mode.

Thus, the present invention provides a display apparatus and a control method thereof, which can decrease power consumption in a power saving mode.

Although an embodiment of the present invention has been shown and described, it will be appreciated by those skilled in the art that changes may be made in the embodiment without departing from the principles and spirit of the general inventive concept, the scope of which is defined in the appended claims.

## Claims

1. A display apparatus comprising a first communication port (10) to receive a first video signal, a second communication port (20)to receive a second video signal, and a display unit (5), the display apparatus further comprising:
a first video signal processor (30) including a first synchronous signal processor (31) to check whether a first synchronous signal of the first video signal is inputted;
a second video signal processor (40) including a second synchronous signal processor (42) to check whether a second synchronous signal of the second video signal is inputted; and
a controller to alternately enable the first and second synchronous signal processors according to a predetermined check time to check whether the first or
second synchronous signal is inputted in a power saving mode.

2. The display apparatus according to claim 1, wherein:
the first video signal processor comprises a first scaler including a first scaling processor (35) to process the first video signal to have a format adapted for the display unit; and
the second video signal processor comprises a second scaler including a second scaling processor (46) to process the second video signal to have a format adapted for the display unit.

3. The display apparatus according to claim 1 or 2, wherein each of the first and second communication ports comprises a digital visual interface (DVI) communication port.

4. The display apparatus according to claim 2, wherein the controller controls the first and second scalers in the power saving mode to disable the first scaling processor of the first scaler and the second scaling processor of the second scaler, to enable one of the first and second synchronous signal processors, and to disable the enabled one and enabling the other one of the first and second synchronous signal processors after the lapse of the check time, alternately.

5. The display apparatus according to claim 4, wherein when a check signal indicating that the synchronous signal is outputted from one of the first and second synchronous signal processors while controlling the first and second scalers to alternately enable the first and second synchronous signal processors, the controller controls one of the first and second scalers to enable the scaling processor of the corresponding scaler comprising the synchronous signal processor outputting the check signal and to display the video signal processed by the corresponding scaler.

6. The display apparatus according to claim 4, wherein when a check signal indicating that the synchronous signal is outputted from one of the first and second synchronous signal processors while controlling the first and second scalers to alternately enable the first and second synchronous signal processors, the controller controls one of the first and second scalers to continuously enable the other synchronous signal processor that does not output the check signal.

7. A method of controlling a display apparatus comprising a first communication port to receive a first video signal, a second communication port to receive a second video signal, a first video signal processor including a first synchronous signal processor to check whether a first synchronous signal of the first video signal is inputted, a second video signal processor including a second synchronous signal processor to check whether a second synchronous signal of the second video signal is inputted, and a display unit, the method comprising:
disabling the first and second video signal processors in a power saving mode; and
alternately enabling the first and second synchronous signal processors according to a predetermined check time to check whether the first or second synchronous signal is inputted.

8. The method according to claim 7, wherein:
the first video signal processor comprises a first scaler including a first scaling processor to process the first video signal to have a format adapted for the display unit; and
the second video signal processor comprises a second scaler including a second scaling processor to process the second video signal to have a format adapted for the display unit.

9. The method according to claim 8, wherein each of the first and second communication ports comprises a digital visual interface (DVI) communication port.

10. The method according to claim 9, wherein the disabling of the first and second video signal processors in the power saving mode comprises disabling the first scaling processor of the first scaler and the second scaling processor of the second scaler.

11. The method according to claim 10, wherein the enabling of the first and second synchronous signal processors alternately comprises:
enabling one of the first and second synchronous signal processors; determining whether the check time is elapsed;
disabling the enabled one and enabling the other synchronous signal processor after the lapse of the check time; and
returning to the determining whether the check time is elapsed.

12. The method according to claim 11, further comprising:
determining whether the enabled one of the first and second synchronous signal processors outputs a check signal, informing that the synchronous signal is output from one of the synchronous signal processors;
enabling the corresponding scaler by enabling the scaling processor of the corresponding scaler comprising the synchronous signal processor outputting the check signal when it is determined that the check signal is inputted; and
displaying an image based on the video signal processed by the corresponding scaler on the display unit.

13. The method according to claim 12, further comprising:
continuously enabling the other synchronous signal processor that does not output the check signal when it is determined that the check signal is inputted.

14. The method according to claim 12, further comprising:
periodically enabling the other synchronous signal processor that does not output the check signal when it is determined that the check signal is inputted.

15. A computer readable recording medium containing computer readable codes to perform a method, the method comprising:
disabling first and second video signal processors in a power saving mode; and
alternatively enabling the first and second synchronous signal processor according to a predetermined check time to check whether the first or second synchronous signal is input.

16. A display apparatus comprising:
a plurality of scalers (30, 40) having a plurality of synchronous signal processors (31, 42) and a plurality of scaling processors (35, 46); and
a controller to selectively enable the plurality of synchronous signal processors in a power saving mode to check whether a video signal is input through the selectively enabled plurality of synchronous signal processors to be processed in at least one of the scaling processors.

17. The display apparatus according to claim 16, wherein the plurality of synchronous signal processors comprise first and second synchronous signal processors to receive first and second video signals having first and second video formats, respectively, and the controller selectively enable the first and second synchronous signal processors.

18. The display apparatus according to claim 17, wherein the controller enables the first synchronous signal processor a predetermined period of time after disabling the second synchronous signal processor.

19. The display apparatus according to claim 17, wherein the controller enables the first synchronous signal processor for a first predetermined period of time and enables the second synchronous signal processor for a second predetermined period of time, and the first and second periods of time do not overlap.

20. The display apparatus according to claim 19, wherein the first and second periods of time overlap by a third period of time shorter than the first and second periods of time.

21. The display apparatus according to claim 17, wherein when first and second video signals are simultaneously received through the first and second synchronous signal processors, the controller enables a corresponding one of the scaling processors to process one of the first and second video signals according to a priority of the first and second signals and/or the first and second synchronous signal processors.

22. The display apparatus according to claim 16, wherein the controller determines that the video signal and a second video signal are respectively received from at least two of the plurality of synchronous signal processors, and enables a corresponding one of the plurality of scaling processors according to a priority of the first and second video signals.

23. The display apparatus according to claim 16, wherein enabling periods of the plurality of synchronous signal processors do not overlap.

24. The display apparatus according to claim 16, wherein enabling periods of the plurality of synchronous signal processors overlap by a predetermined period of time shorter than at least one of the enabling periods.

25. Apparatus for driving a display, comprising:
a plurality of scalers (30, 40) having a plurality of synchronous signal processors (31, 42) and a plurality of scaling processors (35, 46); and
a controller to selectively enable the plurality of synchronous signal processors without enabling one or more of the scaling processors in a power saving mode to check whether a video signal is input for display.

26. Apparatus according to claim 25 including means for prioritising which of a plurality of video inputs is to be displayed.
